# FASCICULE DE BREVET EUROPEEN

(11) **EP 1 786 659 B1**
(45) Date de publication et mention de la délivrance du brevet: **07.10.2009**
(21) Numéro de dépôt: 05766681.0
(22) Date de dépôt: 25.05.2005
(51) Int. Cl.: B62D 25/08, B60G 15/06

(54) **ENSEMBLE POUR AMORTISSEUR DE VEHICULE COMPRENANT UN RESSORT ET UNE CHAPELLE**
ANORDNUNG FÜR EINEN FAHRZEUGSTOSSDÄMPFER MIT EINER FEDER UND EINER KAMMER
ASSEMBLY FOR A VEHICLE SHOCK ABSORBER, COMPRISING A SPRING AND A CHAMBER

(30) Priorité: 01.06.2004 FR 0405896
(43) Date de publication de la demande: 23.05.2007
(73) Titulaire: Renault SAS, 92100 Boulogne Billancourt (FR)
(72) Inventeur: KOWALSKI, Philippe, F-78180 MONTIGNY LE BRETONNEUX (FR); DENIS, Gérald, F-78180 MONTIGNY LE BRETONNEUX (FR)
(74) Mandataire: Guyon, Rodolphe C.
(86) Numéro de dépôt international: PCT/FR2005/050361
(87) Numéro de publication internationale: WO 2005/118376

(56) Documents cités:
- DE-A1- 10 108 171
- FR-A- 2 787 745
- US-A- 3 273 875

## Description

L'invention concerne les amortisseurs arrière de véhicule automobile.

On connaît de tels amortisseurs pourvus d'un ressort dont l'extrémité supérieure est en appui sur une chapelle reliée à la caisse du véhicule. La réalisation de cet agencement s'avère en pratique relativement onéreuse.

Le document US3273875 propose un ensemble d'amortisseur comprenant un ressort et une chapelle d'appui du ressort constituée par deux pièces identiques

Un but de l'invention est d'abaisser le prix de revient de cet ensemble.

A cet effet, on prévoit selon l'invention un ensemble pour amortisseur de véhicule comprenant un ressort et une chapelle d'appui du ressort constituée par deux pièces identiques. L'ensemble comporte un support de chapelle destiné à être fixé sur un longeron du véhicule, et les deux pièces identiques de la chapelle sont destinées à être fixées au support en s'étendant de part et d'autre de celui-ci.

Ainsi, les deux chapelles d'amortisseur arrière d'un véhicule peuvent être réalisées au moyen de quatre pièces identiques entre elles et issues du même outillage. Le nombre de références de pièces se trouve en outre abaissé. De plus, l'ensemble de la structure est simplifié. Enfin, l'assemblage des différentes pièces peut être externalisé de façon que l'ensemble comprenant la chapelle soit reçu en usine prêt à être monté sur le véhicule.

L'ensemble selon l'invention pourra présenter en outre au moins l'une quelconque des caractéristiques suivantes :
- les deux pièces sont disposées symétriquement l'une par rapport à l'autre de part et d'autre d'un plan vertical parallèle à une direction de marche du véhicule ;
- le support présente un téton de centrage ;
- il comprend un filtre anti-vibration interposé entre la chapelle et le ressort.

D'autres caractéristiques et avantages de l'invention apparaîtront encore dans la description suivante d'un mode préféré de réalisation donné à titre d'exemple non limitatif en référence aux dessins annexés sur lesquels :
- la figure 1 est une vue en perspective de la chapelle d'amortisseur dans un mode préféré de réalisation de l'invention, fixée à un longeron ;
- la figure 2 est une vue éclatée en perspective de la chapelle de la figure 1 avec son support ;
- la figure 3 est une vue en élévation de la chapelle de la figure 1 ;
- la figure 4 est une vue éclatée de dessous de la chapelle de la figure 1 avec son support ; et
- la figure 5 montre la disposition relative de la chapelle, du ressort et du filtre anti-vibration dans le mode de réalisation de la figure 1.

On a illustré aux figures un ensemble d'amortisseur selon un mode préféré de réalisation de l'invention. Cet ensemble d'amortisseur est destiné à l'une quelconque des roues arrière d'un véhicule automobile. Les ensembles d'amortisseurs des deux roues sont similaires.

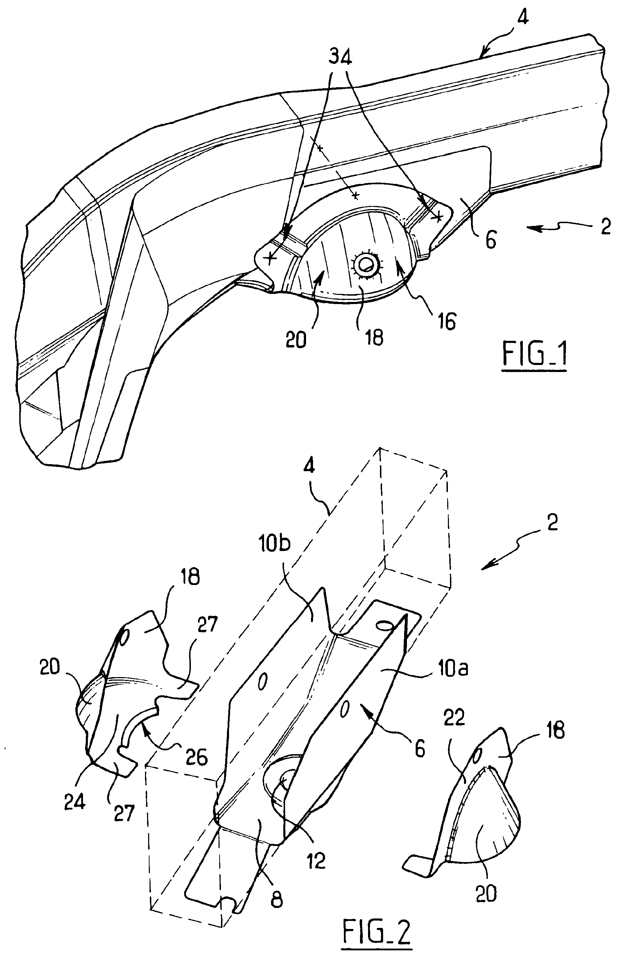

L'ensemble 2 comprend un longeron 4 illustré en détail à la figure 1 et de façon schématique à la figure 2. Il s'agit d'un longeron classique et connu en lui-même formant le châssis du véhicule. Le longeron gauche sera associé à la roue arrière gauche et le longeron droit sera associé à la roue arrière droite.

L'ensemble d'amortisseur comprend un support de chapelle 6 comprenant une base inférieure 8 et deux flancs latéraux 10a et 10b. La base 8 s'étend dans un plan essentiellement horizontal. Elle a une forme rectangulaire en plan, allongée suivant la direction de marche du véhicule. Les flancs 10a et 10b ont chacun une forme plane et s'étendent verticalement vers le haut à partir des bords longitudinaux respectifs de la base 8. Les deux flancs 10a et 10b s'étendent en regard et à distance l'un de l'autre et parallèlement l'un à l'autre. La base 8 présente un téton 12 constituant un relief qui s'étend en saillie vers le bas par rapport à la face inférieure 14 de la base 8. Ce téton a une forme générale circulaire en plan.

Le support 6 est ainsi agencé pour définir entre les flancs un logement pouvant recevoir une partie du longeron 4 comme illustré aux figures 1 et 2, la face inférieure du longeron venant alors en regard de la face supérieure de la base 8 et les faces latérales du longeron venant en regard des faces internes des flancs 10a et 10b.

L'ensemble 2 comprend une chapelle 16. Celle-ci comprend deux pièces 18 qui en l'espèce constituent cette chapelle. Les pièces 18 sont identiques entre elles. Elles sont de surcroît symétriques l'une à l'autre par rapport à un plan vertical s'étendant suivant la direction de marche du véhicule, lorsque les pièces 18 sont en position de montage. Chaque pièce 18 comprend une coque 20 dont la surface est définie géométriquement par un cylindre dont les génératrices apparaissent sur la figure 1. Ces génératrices sont inclinées latéralement par rapport à la direction verticale, en direction de l'autre pièce 18. La coque est limitée vers le haut par un bord supérieur 22 s'étendant essentiellement dans un plan vertical et vers le bas par un bord inférieur 24 s'étendant essentiellement dans un plan horizontal. Ce bord présente une découpe médiane 26 en arc de cercle destinée à venir en regard du téton 12. Il présente également deux pattes latérales 27 destinées à s'étendre en contact surfacique avec la face inférieure 14 de la base 8 du support de chapelle 6.

Les pièces 18 sont destinées à être fixées au support 6 en s'étendant de part et d'autre de celui-ci, en regard respectivement des flancs 10a et 10b. Le bord supérieur 22 de chaque pièce s'étend alors en contact surfacique avec la face externe du flanc correspondant tandis que le bord inférieur 24 s'étend en contact surfacique avec la face inférieure de la base 8.

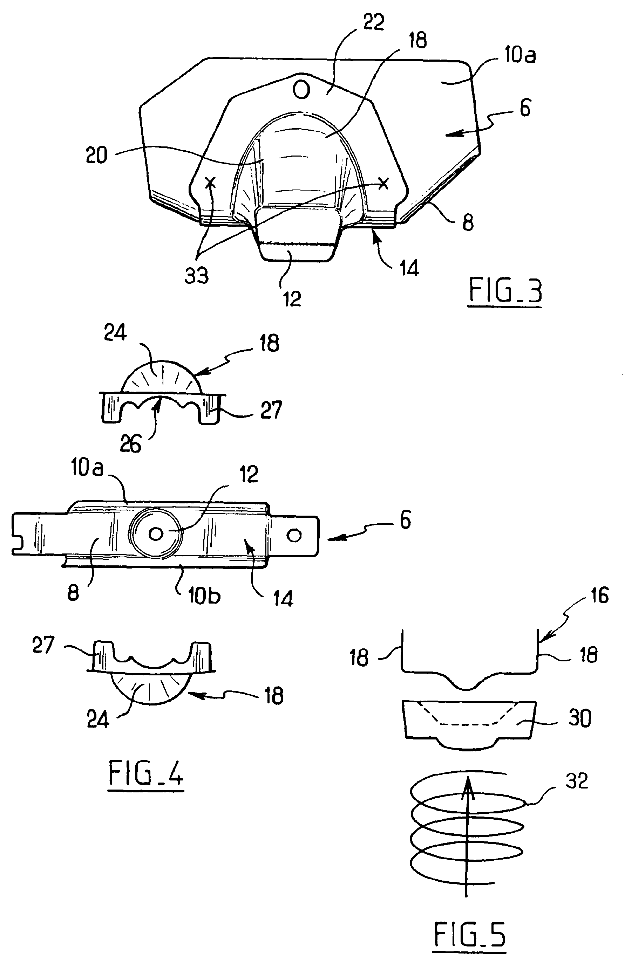

L'ensemble d'amortisseur comprend en outre un filtre anti-vibration 30, par exemple en caoutchouc, illustré à la figure 5. Ce filtre a globalement une forme de galette de révolution évidée au centre de sa face supérieure pour accueillir le téton 12 et présentant au contraire un relief au centre de sa face inférieure pour faciliter le centrage de l'extrémité supérieure du ressort d'amortisseur 32. Le filtre 30 est ainsi interposé entre l'ensemble formé par le support 6 et la chapelle 16 d'une part et le ressort 32 d'autre part, suivant la direction verticale. Le bord inférieur 24 des pièces 18 forme ainsi un appui horizontal essentiellement plan de forme ronde ou ovale à destination du filtre 30, lequel sert d'appui pour l'extrémité supérieure du ressort.

Les pièces 18 sont soudées à la base 6 à deux points 33 situés aux extrémités inférieures du bord vertical 22. Les mêmes pièces sont soudées par la découpe 26 au téton 12 au moyen d'une ligne de soudure.

Le support 6 est quant à lui soudé par chacun de ses flancs au longeron 4 au moyen de deux points 34 qui peuvent également souder chaque pièce 18 au support 6.

Comme illustré aux figures 2 et 3, la base 8 du support 6 pourra être relevée dans ses zones d'extrémités avant et arrière. On pourra également modifier la forme du bord supérieur 22 de chaque pièce 18 pour lui donner au choix une forme courbe, comme illustré à la figure 1 ou une forme en ligne brisée, comme illustré à la figure 3.

Le filtre 30 est positionné entre la chapelle 16 et le ressort 32 sans indexage dans la mesure où il prend sa position finale lorsqu'il est comprimé par le ressort. Il se trouve maintenu en position par la pression du ressort même en présence d'un débattement important.

Un avantage de cet agencement est aussi que le téton 12 se trouve à la verticale du longeron 4 de sorte que le point d'entrée des efforts générés par l'amortisseur sur le châssis se trouve sous le longeron. Comme on le voit, il n'est pas nécessaire de déporter la position du téton par rapport à la chapelle 16 pour arriver à ce résultat.

Les pièces 18 et le support 6 peuvent être réalisés en métal embouti.

Bien entendu, on pourra apporter à l'invention de nombreuses modifications sans sortir du cadre de celle-ci.

Les points de soudure 33 et 34 pourront être confondus de sorte que la même étape de soudure réalise la fixation des demi-chapelles, du support 6 et du longeron 4.

## Revendications

1. Ensemble pour amortisseur de véhicule comprenant un ressort (32) et une chapelle (16) d'appui du ressort constituée par deux pièces identiques (18), **caractérisé en ce qu'**il comporte un support de chapelle (6) destiné à être fixé sur un longeron (4) du véhicule, et **en ce que** les deux pièces identiques (18) de la chapelle (16) sont destinées à être fixées au support (6) en s'étendant de part et d'autre de celui-ci.

2. Ensemble selon la revendication 1, **caractérisé en ce que** le support comporte deux flancs latéraux (10a et 10b), et **en ce que** les deux pièces identiques (18) de la chapelle (16) sont destinées à être fixées au support (6) en s'étendant de part et d'autre de celui-ci, en regard respectivement des flancs latéraux (10a et 10b) du support (6).

3. Ensemble selon la revendication 2, **caractérisé en ce que** le support (6) de chapelle comprend les flancs latéraux (10a et 10b) et une base inférieure (8), et **en ce qu'**elle est agencée pour définir entre les flancs latéraux (10a et 10b) un logement recevant une partie du longeron (4) du véhicule.

4. Ensemble selon l'une quelconque des revendications précédentes, **caractérisé en ce qu'**il comprend un filtre anti-vibration (30) interposé entre la chapelle (16) et le ressort (32).

5. Ensemble selon l'une quelconque des revendications précédentes, **caractérisé en ce que** le support (6) présente un téton de centrage (12).

6. Ensemble selon l'une quelconque des revendications précédentes, **caractérisé en ce que** les deux pièces (18) sont disposées symétriquement l'une par rapport à l'autre, de part et d'autre d'un plan vertical parallèle à une direction de marche du véhicule.

## Claims

1. Assembly for a vehicle shock absorber comprising a spring (32) and a spring cage (16) consisting of two identical parts (18), **characterized in that** it comprises a cage support (6) intended to be attached to a side member (4) of the vehicle, and **in that** the two identical parts (18) of the cage (16) are intended to be attached to the support (6) lying one on either side thereof.

2. Assembly according to Claim 1, **characterized in that** the support comprises two lateral flanks (10a and 10b), and **in that** the two identical parts (18) of the cage (16) are intended to be attached to the support (6) extending one on either side thereof, respectively facing the lateral flanks (10a and 10b) of the support (6).

3. Assembly according to Claim 2, **characterized in that** the cage support (6) comprises the lateral flanks (10a and 10b) and a lower base (8), and **in that** it is designed to define, between the lateral flanks (10a and 10b), a housing to accommodate part of the side member (4) of the vehicle.

4. Assembly according to any one of the preceding claims, **characterized in that** it comprises an anti-vibration filter (30) interposed between the cage (16) and the spring (32).

5. Assembly according to any one of the preceding claims, **characterized in that** the support (6) has a centring stud (12).

6. Assembly according to any one of the preceding claims, **characterized in that** the two parts (18) are positioned symmetrically relative to each other, one on each side of a vertical plane parallel to a direction of travel of the vehicle.

## Patentansprüche

1. Anordnung für einen Fahrzeugstoßdämpfer mit einer Feder (32) und einer Federanlagekammer (16), die aus zwei identischen Teilen (18) besteht, **dadurch gekennzeichnet, dass** sie einen Kammerträger (6) aufweist, die an einem Längsträger (4) des Fahrzeugs befestigt werden soll, und dass die beiden identischen Teile (18) der Kammer (16) so an dem Träger (6) befestigt werden sollen, dass sie sich auf beiden Seiten davon erstrecken.

2. Anordnung nach Anspruch 1, **dadurch gekennzeichnet, dass** der Träger zwei seitliche Flanken (10a und 10b) aufweist und dass die beiden identischen Teile (18) der Kammer (16) so an dem Träger (6) befestigt werden sollen, dass sie sich auf beiden Seiten davon jeweils gegenüber den seitlichen Flanken (10a und 10b) des Trägers (6) erstrecken.

3. Anordnung nach Anspruch 2, **dadurch gekennzeichnet, dass** der Träger (6) der Kammer die seitlichen Flanken (10a und 10b) und eine untere Basis (8) aufweist und dass sie dazu angeordnet ist, zwischen den seitlichen Flanken (10a und 10b) eine einen Teil des Längsträgers (4) des Fahrzeugs aufnehmende Aufnahme zu definieren.

4. Anordnung nach einem der vorhergehenden Ansprüche, **dadurch gekennzeichnet, dass** sie einen Schwingungsdämpfungsfilter (30) umfasst, der zwischen der Kammer (16) und der Feder (32) angeordnet ist.

5. Anordnung nach einem der vorhergehenden Ansprüche, **dadurch gekennzeichnet, dass** der Träger (6) einen Zentrierzapfen (12) aufweist.

6. Anordnung nach einem der vorhergehenden Ansprüche, **dadurch gekennzeichnet, dass** die beiden Teile (18) symmetrisch zueinander auf beiden Seiten einer parallel zur Fahrtrichtung des Fahrzeugs verlaufenden Vertikalebene angeordnet sind.
